# EUROPEAN PATENT APPLICATION

(11) **EP 4 094 971 A1**
(43) Date of publication of application: **30.11.2022**
(21) Application number: 21175784.4
(22) Date of filing: 25.05.2021
(51) Int. Cl.: B60L 3/00, B60L 58/21, B60W 50/023

(54) **A HIGH VOLTAGE TRACTION SYSTEM FOR A VEHICLE**

(71) Applicant: VOLVO TRUCK CORPORATION, 405 08 Göteborg (SE)
(72) Inventor: DUTT, Devraj, 414 56 GÖTEBORG (SE); ENGDAHL, Henrik, 436 40 ASKIM (SE)
(74) Representative: Kransell & Wennborg KB

(57) **Abstract**

The present invention relates to a high voltage traction system for a vehicle comprising two independently controllable power sub-systems being a powertrain power sub-system, PPS, and a vehicle power sub-system, VPS, the PPS comprising a plurality of PPS secondary power consumers and a PPS master controller being configured to arbitrate power limits among the PPS secondary power consumers by a first arbitration logic, and the VPS comprising a plurality of VPS secondary power consumers and a VPS master controller being configured to arbitrate power limits among the VPS secondary power consumers by a second arbitration logic, different to the first arbitration logic. The system also comprises a master interface between the PPS master controller and the VPS master controller enabling communication exchange between the PPS and VPS including system-shared instructions of prioritization of the PPS and VPS secondary power consumers limiting the first arbitration logic and/or the second arbitration logic in a limited state.

## Description

### TECHNICAL FIELD

The present invention relates to high voltage traction system for a vehicle. The invention further relates to a method for operating a high voltage traction system of a vehicle, to a vehicle, to a computer program and to a control unit.

### BACKGROUND

A vehicle typically comprises an engine or machine for propelling the vehicle. The engine may be powered by various means, such as e.g. by a liquid or gaseous fuel in an internal combustion engine, or by electric power to an electric machine. Moreover, hybrid solutions exist in which e.g. the vehicle is propelled both by an internal combustion engine and an electric machine. In either way, an energy storage or energy transformation device, such as e.g. a battery or a fuel cell, is used to provide the energy needed in order to propel the vehicle.

In a vehicle, the engine or electric machine is part of a powertrain which transform energy from the energy storage device to the propelling means, typically the wheels of the vehicle. For this purpose, the powertrain further comprises transmission and drive shafts. For many vehicles, the energy storage devices are comprised in an energy storage system. For example, for an electric vehicle, the energy storage devices may be batteries, which are configured to power the electric machine as well as electrically driven auxiliary equipment. The electric machine and/or the electrically driven auxiliary equipment may be commonly referred to as loads. The batteries are periodically in need of charging, and is then electrically connected to an electrical energy source, e.g. via plug directly connected to the power grid.

The electrically driven auxiliary equipment, such as e.g. auxiliary equipment operated by a power take off, PTO, may be energy demanding equipment which preferably is operated by a high voltage system, such as the high voltage traction system of the vehicle. Moreover, the electrically driven auxiliary equipment, typically powered by the vehicle power system and thus referred to as vehicle power consumers, may be considered different to the loads and the power consumers of the powertrain power system. For example, the vehicle power system may be considered as a power system for powering power consumers of the vehicle other than those of the powertrain. Furthermore, the vehicle power system may be designed and developed separately to the powertrain power system. In such cases, the two power systems, or power sub-systems, need to comply with each other.

Even though the power systems or power sub-systems are configured to comply with each, conflicts between the two systems or sub-systems may occur, and further improvements in the characterisation of the power systems are needed.

### SUMMARY

It is an object of the present invention to at least to some extent alleviate the shortcomings discussed above in relation to known power systems.

According to at least a first aspect of the present invention, a high voltage traction system for a vehicle is provided. The high voltage traction system comprises:
- two independently controllable power sub-systems being a powertrain power sub-system, PPS, and vehicle power sub-system, VPS, the PPS comprising a plurality of PPS secondary power consumers and a PPS master controller being configured to arbitrate power limits among the PPS secondary power consumers by a first arbitration logic, and the VPS comprising a plurality of VPS secondary power consumers and a VPS master controller being configured to arbitrate power limits among the VPS secondary power consumers by a second arbitration logic, different to the first arbitration logic,
- a master interface between the PPS master controller and the VPS master controller enabling communication exchange between the PPS and VPS,
wherein the high voltage traction system is operable in a limited state in which the requested power of the PPS secondary power consumers and VPS secondary power consumers exceeds the available power transfer in the high voltage traction system and wherein the communication exchange comprises system-shared instructions of prioritization of the PPS and VPS secondary power consumers limiting the first arbitration logic and/or the second arbitration logic in the limited state.

Hereby, the two power sub-systems, the PPS and the VPS, can operate independently of each other according to the first arbitration logic and the second arbitration logic, respectively, during operation outside of the limited state, i.e. in a state in which both the PPS and VPS can satisfy the PPS and VPS secondary power consumers, respectively, while still being operable in a limited state, i.e. in a state in which the available power is limited and not enough to satisfy the PPS and/or the VPS secondary power consumers, simply by providing a master interface enabling communication exchange between the PPS and VPS. The communication exchange is typically carried out between the PPS master controller and VPS master controller via the master interface. Thus, there is no need for an overall master controller configured to arbitrate power limits among the PPS and VPS (or other power sub-systems), but instead a master interface for providing system-shared instructions of prioritization of the PPS and VPS secondary power consumers. Thus, the PPS master controller and the VPS master controller are programmed to obey the system-shared instructions of prioritization. Hereby, the PPS and the VPS can be designed and developed independently of each other and still being able to operate in the limited state without being adapted to be controlled by a separate master controller (such as an overall master controller).

According to at least one example embodiment, the PPS and VPS master controllers are configured to arbitrate power limits among their secondary power consumers by being configured to set the power limits of the secondary power consumers. Stated differently, the PPS and VPS master controllers are configured to allocated power among their secondary power consumers, or being configured to determine the distributed power among the secondary power consumers within their respective power sub-system. As yet an alternative, the PPS master controller may be referred to as governing the PPS, and the VPS master controller may be referred to as governing the VPS.

The system-shared instructions of prioritization of the PPS and VPS secondary power consumers limiting the first arbitration logic and/or the second arbitration logic in the limited state may e.g. be comprised in the PPS master controller and/or the VPS master controller. Alternatively, the system-shared instructions of prioritization of the PPS and VPS secondary power consumers are comprised in a database separate from the PPS master controller and the VPS master controller, e.g. by being comprised in an electronic control unit, ECU, of the vehicle. Stated differently, the master interface between the PPS master controller and the VPS master controller is configured for communication exchange of power transfer within each sub-systems, wherein the communication exchange comprises system-shared instructions of prioritization of the PPS and VPS secondary power consumers. Thus, the PPS and VPS are independently controlled by their respective master controller, and, in the limited state, together controlled by the system-shared rules of prioritization.

According to at least one example embodiment, the system-shared instructions of prioritization comprises instructions related to which of the PPS and VPS secondary power consumers that should be prioritized under given vehicle conditions or vehicle operations. The system-shared instructions of prioritization may comprise classification and categorisation of the VSP and PPS secondary power consumers, For example, in a safety-critical vehicle condition, safety-critical secondary power consumers are given a higher priority than non safety-critical secondary power consumers. Such safety-critical secondary power consumers may be VPS secondary power consumer(s) and/or PPS secondary power consumer(s). Hereby, safety-critical functionality can be ensured in the limited state. According to another example embodiment, in a vehicle operation in which an auxiliary equipment is instructed to perform an auxiliary action, the corresponding VPS secondary power consumer(s), typically the auxiliary equipment itself, is prioritized over the PPS secondary power consumers. Hence, the auxiliary action may be performed in the limited state. According to yet another example, in a vehicle condition for charging the batteries, the batteries typically being PPS secondary power consumers, the batteries are given a higher priority than other VPS and PPS secondary power consumers. Moreover, the system-shared instructions of prioritization may be dynamic, and if a problem arises, e.g. that the batteries are becoming too hot during charging, the system-shared instructions of prioritization may allow power to be relocated from the PPS to the VPS, at least for some time.

According to at least one example embodiment, the system-shared instructions of prioritization comprises absolute limits relative the high voltage traction system. For example, the absolute limits may comprise a limit of maximum power allowed to be drawn from the grid, e.g. 60 Amps at 600 V. The absolute limits may alternatively or additionality comprises power limitations from and to the PPS and/or power limitations from and to the VPS.

According to at least one example embodiment, the PPS and VPS have the same operating voltage.

Thus, the PPS and VPS belong the same system, i.e. the high voltage traction system, of the vehicle. The operating voltage may e.g. be 48 V or higher, such as e.g. higher than 400 V, e.g. 600 V, or between 650 V and 750 V. According to at least one example embodiment, the operating voltage is between 48 V and 750 V, e.g. between 400 V and 750 V.

According to at least one example embodiment, the PPS and the VPS are independently controlled by the PPS master controller and the VPS master controller, respectively.

Thus, the PPS is, via the PPS master controller, configured to control power transfer of the powertrain system of the vehicle, and the VPS is, via the VPS master controller, configured to control power transfer of vehicle-related power consumers other than the powertrain. According to at least one example embodiment, the PPS master controller is not able to arbitrate power limits among the VPS secondary power consumers, and correspondingly, the VPS master controller is not able to arbitrate power limits among the PPS secondary power consumers. Thus, the PPS and VPS are configured to be operated independently of each other, at least when operated outside of the limited state.

According to at least one example embodiment, the PPS master controller and the VPS master controller are on the same hierarchy level in the high voltage traction system.

Thus, the PPS master controller and the VPS master controller are configured to govern their respective sub-system, without interference from the other master controller. Instead, the system-shared instructions of prioritization comprises instructions related to which of the PPS and VPS secondary power consumers that should be prioritized under given vehicle conditions or vehicle operation in the limited state, as previously described. Hereby, the PPS master controller and the VPS master controller may be configured to, or programmed to, govern their respective sub-system without considerations to secondary power consumers outside of their respective sub-system. Thus, the PPS master controller and the VPS master controller may be made less complex compared to a master controller governing different sub-systems, such as both PPS and VPS. According to at least one example embodiment, the functionality of either one of the PPS and the VPS may be changed without the need for the functionality of the other one of the PPS and VPS to change.

According to at least one example embodiment, each one of the PPS master controller and the VPS master controller is configured to perform high level system functions of power monitoring and power scheduling.

According to at least one example embodiment, each one of the PPS master controller and the VPS master controller is configured to perform real time power allocation, charge monitoring, and/or vehicle to grid power transfers.

According to at least one example embodiment, PPS is, via the PPS master controller, configured to control power transfer to/from the powertrain. The powertrain may e.g. include batteries, switching arrangement including contactors and other powertrain related equipment. According to at least one example embodiment, the PPS is, via the PPS master controller, configured to control power in/out of the high voltage traction system relative the vehicle.

According to at least one example embodiment, the VPS is, via the VPS master controller, configured to control power transfer within the vehicle other than that of the powertrain. The power transfer other than that of the powertrain may e.g. include auxiliary equipment, heaters and other non-powertrain related equipment.

According to at least one example embodiment, the PPS master controller is configured to handle a change in the plurality of PPS secondary power consumers by changing the first arbitration logic, and the VPS master controller is configured to handle a change in the plurality of VPS secondary power consumers by changing the second arbitration logic, wherein the communication exchange via the master interface is remained unaffected.

That is, as the PPS and VPS are independently designed, a change in either one of the sub-systems does not affect the other sub-systems. Typically, however, the change in the plurality of VPS and/or PPS secondary power consumers is included in the system-shared instructions of prioritization. For example, in case that a new secondary power consumer is added to the VPS and/or PPS, the newly added secondary power consumer user may be classified and categorised into the already existing classification and categorisation, and may thus be handled by the system-shared instructions of prioritization without affecting the VPS master controller, the PPS master controller or the master interface.

According to at least one example embodiment, the master interface is configured to exchange information of intended power usage of the plurality of PPS secondary power consumers and VPS secondary power consumers, such that the PPS master controller is informed of the intended power usage of VPS secondary power consumers and the VPS master controller is informed of the intended power usage of the PPS secondary power consumers, and wherein the master interface is configured to use the exchanged information of intended power usage together with the system-shared instructions of prioritization to limit the first arbitration logic and/or the second arbitration logic and to decide when and which of the PPS and VPS secondary power consumers that is to be powered.

Hereby, a simple yet effective means for operating the PPS and VPS in the limited state is provided. Thus, and according to at least one example embodiment, the master interface provides information, together with the system-shared instructions of prioritization, of how much power one of the PPS and VPS can allow the other to use.

According to at least one example embodiment, the limited state comprises a state in which the high voltage traction system is connected to the grid.

That is, the limited state in which the requested power of the PPS secondary power consumers and VPS secondary power consumers exceeds the available power transfer in the high voltage traction system is a state in which the high voltage traction system is connected to the grid. For example, the available power transfer in the high voltage traction system is limited by the connection interface between the grid and the high voltage traction system. When the high voltage traction system is connected to the grid, PPS secondary power consumers, such as e.g. batteries, may be charged, and/or VPS secondary power consumers, such as e.g. auxiliary equipment, may be powered and used for auxiliary actions.

According to at least one example embodiment, the limited state in which the requested power of the PPS secondary power consumers and VPS secondary power consumers exceeds the available power transfer in the high voltage traction system is a state in which the vehicle is being propelled. For example, the available power transfer in the high voltage traction system is limited by internal re-distribution of power within the high voltage traction system.

According to a second aspect of the present invention, a method for operating a high voltage traction system of a vehicle is provided. The high voltage traction system comprises two independent power sub-systems being a powertrain power sub-system, PPS, and vehicle power sub-system, VPS, the PPS comprising a plurality of PPS secondary power consumers and a PPS master controller configured to arbitrate power limits among the PPS secondary power consumers by a first arbitration logic, the VPS comprising a plurality of VPS secondary power consumers and a VPS master controller configured to arbitrate power limits among the VPS secondary power consumers by a second arbitration logic different to the first arbitration logic, and a master interface between the PPS master controller and the VPS master controller enabling communication exchange between the PPS and VPS. The method comprises:
- operating the high voltage traction system in a limited state in which the requested power of the PPS secondary power consumers and VPS secondary power consumers exceeds the available power transfer in the high voltage traction system,
- exchanging communication via the master interface including system-shared instructions of prioritization of the PPS and VPS secondary power consumers limiting the first arbitration logic and/or the second arbitration logic in the limited state.

Effects and features of the second aspect of the invention are largely analogous to those described above in connection with the first aspect of the invention. Embodiments mentioned in relation to the first aspect of the invention are largely compatible with the second aspect of the invention, of which some are exemplified below. Thus, the two power sub-systems, the PPS and the VPS, can be operated independently of each other according to the first arbitration logic and the second arbitration logic, respectively, during operation outside of the limited state, i.e. in a state in which both the PPS and VPS can satisfy the PPS and VPS secondary power consumers, respectively, while still being able to be operated in a limited state, i.e. in a state in which the available power is limited and not enough to satisfy the PPS and/or the VPS secondary power consumers, simply by providing a master interface enabling communication exchange between the PPS and VPS. The step of exchanging communication via the master interface may comprise exchanging communication between the PPS master controller and VPS master controller via the master interface. For example, the method may comprise exchanging information of intended power usage of the plurality of PPS secondary power consumers and VPS secondary power consumers, such that the PPS master controller is informed of the intended power usage of VPS secondary power consumers and the VPS master controller is informed of the intended power usage of the PPS secondary power consumers. Furthermore, the method may comprise using, by means of the master interface, the exchanged information of intended power usage together with the system-shared instructions of prioritization to limit the first arbitration logic and/or the second arbitration logic and to decide when and which of the PPS and VPS secondary power consumers that is to be powered.

According to at least one example embodiment, outside of the limited state (also referred to as an unlimited state), the method comprises:
- arbitrating power limits among the PPS secondary power consumers by means of the PPS master controller using a first arbitration logic,
- arbitrating power limits among the VPS secondary power consumers by means of the VPS master controller using a second arbitration logic,

The first arbitration logic is typically independent of the second arbitration logic, but both the first and second arbitration logic are governed by the system-shared instructions of prioritization.

According to at least one example embodiment, the method comprises: operating the PPS and VPS at the same operating voltage.

According to at least one example embodiment, the method comprises: independently controlling the PPS and VPS by the PPS master controller and the VPS master controller, respectively.

According to at least one example embodiment, the method comprises: performing high level system functions of power monitoring and power scheduling by means of the PPS master controller and the VPS master controller.

According to at least one example embodiment, the method comprises:
- performing a change in the plurality of PPS secondary power consumers by changing the first arbitration logic by means of the PPS master controller,
- performing a change in the plurality of VPS secondary power consumers by the changing second arbitration logic by means of the VPS master controller,
wherein the step of exchanging communication via the master interface is remained unaffected.

According to at least one example embodiment, operating the high voltage traction system in a limited state comprises operating the high voltage traction system in a state in which the high voltage traction system is connected to the grid.

According to a third aspect of the present invention, a vehicle comprising a high voltage traction system according to the first aspect of the invention is provided.

According to a fourth aspect of the present invention, a computer program comprising program code means for performing the method of the second aspect of the invention, when the program is run on a computer, is provided.

According to a fifth aspect of the present invention, a computer readable medium carrying a computer program comprising program code means for performing the method of the second aspect of the invention, when the program is run on a computer, is provided.

According to a sixth aspect of the present invention, a control unit for operating a high voltage traction system of a vehicle is provided. The control unit comprises the computer program according to the fourth aspect of the present invention, or the computer readable medium according to the fifth aspect of the present invention, or is configured for performing the method of the second aspect of the invention.

The high voltage traction system may be referred to as the high voltage system for operating an electric machine configured to provide propelling power of the vehicle.

The order of the method steps described in the present disclosure is not constrained to that described in the second aspect of the invention. One or several of the steps could switch places, or occur in a different order without departing from the scope of the invention. However, according to at least one example embodiment, the method steps are performed in the consecutive order described in the second aspect of the invention.

Further advantages and features of the present disclosure are disclosed and discussed in the following description and the accompanying drawings.

### BRIEF DESCRIPTION OF THE DRAWINGS

With reference to the appended drawings, below follows a more detailed description of embodiments of the invention cited as examples. In the drawings:
Fig. 1 is a schematic side view of a vehicle comprising a high voltage traction system in accordance with example embodiments of the invention,
Fig. 2 is a schematic view of a high voltage traction system in accordance with an example embodiment of the invention, and
Fig. 3 is a flowchart illustrating the steps of a method in accordance with example embodiments of the invention.

### DETAILED DESCRIPTION OF EXAMPLE EMBODIMENTS OF THE INVENTION

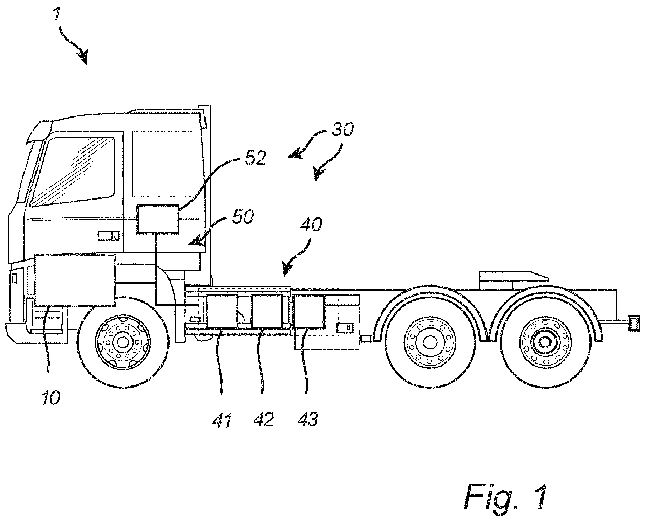

With reference to Fig. 1, a vehicle 1, here embodied as a heavy duty truck 1, is disclosed for which a method and a high voltage traction system 30 of a kind disclosed in the present invention is advantageous. However, the method, and a high voltage traction system 30 may as well be implemented in other types of vehicles, such as in busses, light-weight trucks, passenger cars, marine applications (e.g. a vessel) etc. The vehicle 1 is an electric vehicle, such as a full electric vehicle or a hybrid, comprising at least one electric machine 10, a powertrain power subsystem, PPS, 40 comprising energy storage or energy transformation devices, typically batteries or fuel cells, 41, 42, 43 arranged and configured to power the electric machine 10. The vehicle 1 further comprises at least one electrically driven auxiliary equipment 52, e.g. being a heater or a tool, powered by a vehicle power subsystem VPS, 50. The vehicle 1 typically further comprises other parts of the powertrain such as transmission, drive shafts and wheels (not shown in detail in Fig. 1). The electric machine 10 is typically controlled by a control unit, e.g. being comprised in an ECU of the vehicle 1.

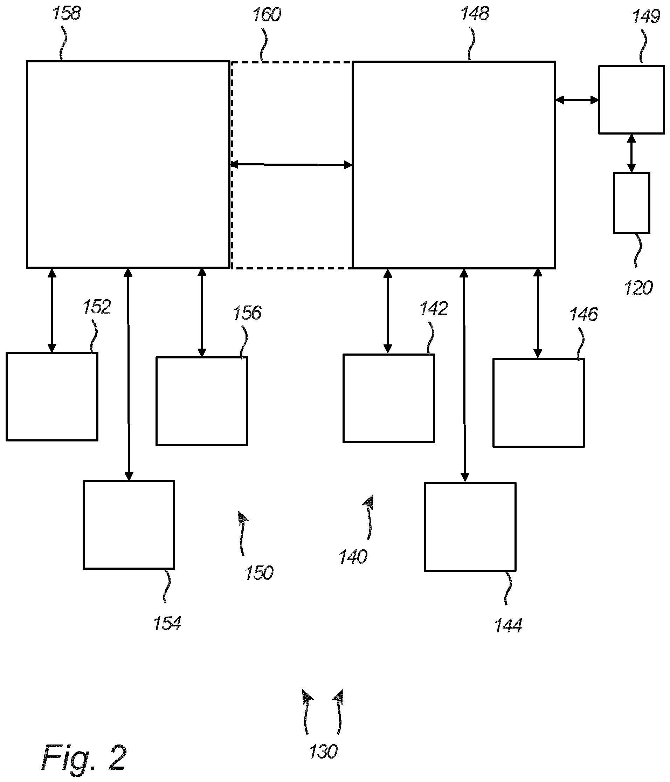

Fig. 2 schematically illustrates a high voltage traction system 130 for a vehicle, such as e.g. vehicle 1 of Fig. 1. The high voltage traction system 130 comprises two independently controllable power sub-systems 140, 150 being a powertrain power sub-system, PPS, 140 and vehicle power sub-system, VPS, 150. Typically, the PPS 140 and VPS 150 have the same operating voltage, e.g. 600 V. Moreover the PPS 140 comprises a plurality of PPS secondary power consumers 142, 144, 146 and a PPS master controller 148 being configured to arbitrate power limits among the PPS secondary power consumers 142, 144, 146 by a first arbitration logic. Correspondingly, the VPS 150 comprises a plurality of VPS secondary power consumers 152, 154, 156 and a VPS master controller 158 being configured to arbitrate power limits among the VPS secondary power consumers 152, 154, 156 by a second arbitration logic, different to the first arbitration logic. Thus, the PPS 140 and the VPS 150 are independently controlled by the PPS master controller 148 and the VPS master controller 158, respectively. Each one of the PPS master controller 148 and the VPS master controller 158 is configured to perform high level system functions of power monitoring and power scheduling related to their respective secondary power consumers. Moreover, the high voltage traction system 130 comprises a master interface 160 between the PPS master controller 148 and the VPS master controller 158 enabling communication exchange between the PPS 140 and VPS 150. As also shown in Fig. 2, the PPS master controller 148 is configured to control a charging system 149 connected to the grid 120 for providing power transfer to the high voltage traction system 130. For example, at least one of the PPS secondary power consumers 142, 144, 146 is a battery 146 or a battery pack 146, being chargeable by the grid 120. According to another example, at least one of the VPS secondary power consumers 152, 154, 156 is an auxiliary equipment 156, configured to be powered by the battery 146 or the grid 120.

Typically, during operation of the vehicle, the high voltage traction system 130 is subject to external and internal power transfer. For example, in a vehicle condition or vehicle operation in which the battery 146 is to be charged, the PPS master controller 148 controls the power transfer from the grid 120, via the charging system 149 to the battery 146. In another vehicle condition or vehicle operation in which an auxiliary action is to be performed, the VPS master controller 158 controls the power transfer from the grid 120, or the battery 146, to the auxiliary equipment 156. In operating states with sufficient power transfer for satisfying the secondary power consumers of the PPS 140 and the VPS 150, the high voltage tractions system 130 may be referred to as being operated in an unlimited state. Thus, in such state, there is enough power, or sufficient power transfer possibilities, for satisfying the need of the PPS 140 and VPS 150. Thus, each one of the PPS 140 and VPS 150 may be operated based on the first and second arbitration logic, respectively, without any external restrictions. However, in operating states with insufficient power transfer for satisfying the secondary power consumers of the PPS 140 and the VPS 150, the high voltage traction system 130 may be referred to as being operated in a limited state. Thus, in the limited state, the requested power of the PPS secondary power consumers 142, 144, 146 and the VPS secondary power consumers 152, 154, 156 exceeds the available power transfer in the high voltage traction system 130. The limited state may e.g. be a state in which the high voltage traction system 130 is connected to the grid 120.

The communication exchange between the PPS 140 and VPS 150, or between the PPS master controller 148 and the VPS master controller 158, via the master interface 160 comprises system-shared instructions of prioritization of the PPS and VPS secondary power consumers 142, 144, 146, 152, 154, 156. The system-shared instructions of prioritization limits the first arbitration logic and/or the second arbitration logic in the limited state. That is, in the limited state in which the requested power of the PPS secondary power consumers 142, 144, 146 and the VPS secondary power consumers 152, 154, 156 exceeds the available power transfer in the high voltage traction system 130, the system-shared instructions of prioritization decides which of the PPS and VPS secondary power consumers 142, 144, 146, 152, 154, 156 that is to be prioritised. Thus, the PPS master controller 148 and the VPS master controller 158 are typically on the same hierarchy level in the high voltage traction system 130, and the system-shared instructions of prioritization governs the power transfer to and from the PPS and VPS secondary power consumers 142, 144, 146, 152, 154, 156 in the limited state.

As the PPS 140 and VPS 150 are independently controlled by their respective master controller 148, 158, the PPS 140 and VPS 150 may be designed and developed independently of each other and still being able to operate in the limited state without being adapted to be controlled by a separate master controller (such as an overall master controller). For example, the PPS master controller 148 may be configured to handle a change in the plurality of PPS secondary power consumers 142, 144, 146 (for example the disconnection of a battery 146, or the addition of a new battery) by changing the first arbitration logic. Correspondingly, the VPS master controller 158 is configured to handle a change in the plurality of VPS secondary power consumers 152, 154, 156 (for example the disconnection of an auxiliary equipment, or the addition of a new auxiliary equipment) by changing the second arbitration logic. Thus, the communication exchange via the master interface 160 may remained unaffected of the individual changes of the PPS 140 and VPS 150.

The master interface 160 may for example be configured to exchange information of intended power usage of the plurality of PPS secondary power consumers 142, 144, 146 and VPS secondary power consumers 152, 154, 156, such that the PPS master controller 148 is informed of the intended power usage of VPS secondary power consumers 152, 154, 156 and the VPS master controller 158 is informed of the intended power usage of the PPS secondary power consumers 142, 144, 146. For example, the VPS master controller 158 may receive power information of the battery or batteries of the PPS 140. Moreover, the master interface 160 may be configured to use the exchanged information of intended power usage together with the system-shared instructions of prioritization to limit the first arbitration logic and/or the second arbitration logic and to decide when and which of the PPS and VPS secondary power consumers 142, 144, 146, 152, 154, 156 that is to be prioritised or powered.

In Fig. 2, the double pointing arrows are referring to communication exchange between the components of the high voltage traction system 130, rather than power transfer. Power transfer is typically carried out directly between a PPS secondary power consumers, such as e.g. a battery 146, and a PPS or VPS secondary power consumer, such as e.g. an auxiliary equipment.

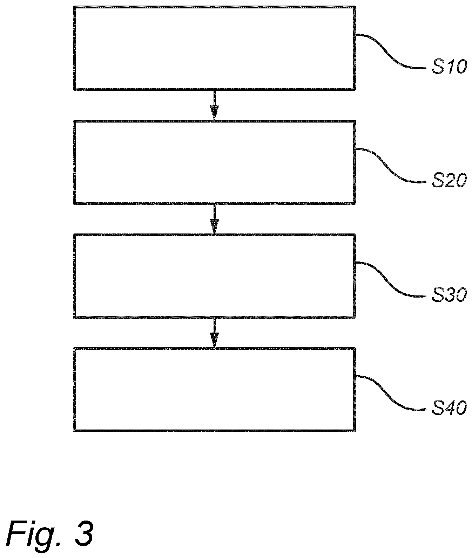

A method for operating a high voltage traction, such as the high voltage traction system 130 of Fig. 2, will now be described in more general terms with additional reference to Fig. 3. Fig. 3 is a flowchart describing the steps of such method. The method may e.g. be implemented in a control unit, or ECU, of the vehicle. The high voltage traction system being subject to the method described with reference to Fig. 3 comprises two independent power sub-systems being a powertrain power sub-system, PPS, and a vehicle power sub-system, VPS, the PPS comprising a plurality of PPS secondary power consumers and a PPS master controller configured to arbitrate power limits among the PPS secondary power consumers by a first arbitration logic. Correspondingly, the VPS comprises a plurality of VPS secondary power consumers and a VPS master controller configured to arbitrate power limits among the VPS secondary power consumers by a second arbitration logic different to the first arbitration logic. The high voltage traction system further comprises a master interface between the PPS master controller and the VPS master controller enabling communication exchange between the PPS and VPS.

In a first step S10, the high voltage traction system is operated in a limited state in which the requested power of the PPS secondary power consumers and VPS secondary power consumers exceeds the available power transfer in the high voltage traction system. The limited state may e.g. be a state in which the high voltage traction system is connected to the grid. Thus the limitation in the available power transfer may be originating from power limitations from and to the grid, power limitations from and to the PPS, and power limitations to and from the VPS. Typically, the first step comprises operating the PPS and VPS at the same operating voltage.

In a second step S20, exchanging communication via the master interface is performed, the exchanged information includes system-shared instructions of prioritization of the PPS and VPS secondary power consumers limiting the first arbitration logic and/or the second arbitration logic in the limited state. Thus, the PPS and the VPS are independently controlled by the PPS master controller and the VPS master controller, respectively, and only the system-shared instructions of prioritization may influence the operation of the PPS and VPS by means of their respective master controller. That is, the PPS is not controlled by the VPS master controller, and the VPS is not controlled by the PPS master controller. Typically each one of the PPS master controller and the VPS master controller is performing high level system functions of power monitoring and power scheduling.

In a third step S30, a change in the plurality of PPS secondary power consumers is performed by changing the first arbitration logic by means of the PPS master controller. For example, an additional PPS secondary power consumer may be added to the PPS.

In a fourth step S40, a change in the plurality of VPS secondary power consumers is performed by changing the second arbitration logic by means of the VPS master controller. For example, an additional VPS secondary power consumer may be added to the VPS, or a VPS secondary power consumers is replaced with another VPS secondary power consumer.

Thus, as the change of PPS secondary power consumers and/or VPS secondary power consumers are handled by the PPS master controller and the VPS master controller, respectively, the communication exchange via the master interface may remained unaffected. Only the system-shared instructions of prioritization may be updated based on the changes.

It should be noted that the naming of the steps not necessarily, but might according to at least one example embodiment, relate to the order in which the steps are carried out, unless explicitly stated otherwise. One or more of the steps may be combined and carried out simultaneously and/or one or more of the steps may be omitted.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

It should be understood that the master controller, or control units, may refer to a combination of analog and digital circuits, and/or one or more processors configured with program software and/or firmware, e.g. stored in a memory, that when executed by the one or more processors perform the one or more of the steps described in conjunction with Fig. 3. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

## Claims

1. A high voltage traction system for a vehicle comprising:
- two independently controllable power sub-systems being a powertrain power sub-system, PPS, and a vehicle power sub-system, VPS, the PPS comprising a plurality of PPS secondary power consumers and a PPS master controller being configured to arbitrate power limits among the PPS secondary power consumers by a first arbitration logic, and the VPS comprising a plurality of VPS secondary power consumers and a VPS master controller being configured to arbitrate power limits among the VPS secondary power consumers by a second arbitration logic, different to the first arbitration logic;
- a master interface between the PPS master controller and the VPS master controller enabling communication exchange between the PPS and VPS,
wherein the high voltage traction system is operable in a limited state in which the requested power of the PPS secondary power consumers and VPS secondary power consumers exceeds the available power transfer in the high voltage traction system and wherein the communication exchange comprises system-shared instructions of prioritization of the PPS and VPS secondary power consumers limiting the first arbitration logic and/or the second arbitration logic in the limited state.

2. The high voltage traction system according to claim 1, wherein the PPS and VPS have the same operating voltage.

3. The high voltage traction system according to any one of the preceding claims, wherein the PPS and the VPS are independently controlled by the PPS master controller and the VPS master controller, respectively.

4. The high voltage traction system according to any one of the preceding claims, wherein the PPS master controller and the VPS master controller are on the same hierarchy level in the high voltage traction system.

5. The high voltage traction system according to any one of the preceding claims, wherein each one of the PPS master controller and the VPS master controller is configured to perform high level system functions of power monitoring and power scheduling.

6. The high voltage traction system according to any one of the preceding claims, wherein the PPS master controller is configured to handle a change in the plurality of PPS secondary power consumers by changing the first arbitration logic, and the VPS master controller is configured to handle a change in the plurality of VPS secondary power consumers by changing the second arbitration logic, wherein the communication exchange via the master interface is remained unaffected.

7. The high voltage traction system according to any one of the preceding claims, wherein the master interface is configured to exchange information of intended power usage of the plurality of PPS secondary power consumers and VPS secondary power consumers, such that the PPS master controller is informed of the intended power usage of VPS secondary power consumers and the VPS master controller is informed of the intended power usage of the PPS secondary power consumers, and wherein the master interface is configured to use the exchanged information of intended power usage together with the system-shared instructions of prioritization to limit the first arbitration logic and/or the second arbitration logic and to decide when and which of the PPS and VPS secondary power consumers that is to be powered.

8. The high voltage traction system according to any one of the preceding claims, wherein the limited state comprises a state in which the high voltage traction system is connected to the grid.

9. A method for operating a high voltage traction system of a vehicle, the high voltage traction system comprising two independent power sub-systems being a powertrain power sub-system, PPS, and vehicle power sub-system, VPS, the PPS comprising a plurality of PPS secondary power consumers and a PPS master controller configured to arbitrate power limits among the PPS secondary power consumers by a first arbitration logic, the VPS comprising a plurality of VPS secondary power consumers and a VPS master controller configured to arbitrate power limits among the VPS secondary power consumers by a second arbitration logic different to the first arbitration logic, and a master interface between the PPS master controller and the VPS master controller enabling communication exchange between the PPS and VPS, the method comprising:
- operating the high voltage traction system in a limited state in which the requested power of the PPS secondary power consumers and VPS secondary power consumers exceeds the available power transfer in the high voltage traction system,
- exchanging communication via the master interface including system-shared instructions of prioritization of the PPS and VPS secondary power consumers limiting the first arbitration logic and/or the second arbitration logic in the limited state.

10. The method according to claim 9, comprising: independently controlling the PPS and VPS by the PPS master controller and the VPS master controller, respectively.

11. The method according to any one of claims 9-10, comprising:
- performing a change in the plurality of PPS secondary power consumers by changing the first arbitration logic by means of the PPS master controller,
- performing a change in the plurality of VPS secondary power consumers by changing second arbitration logic by means of the VPS master controller,
wherein the step of exchanging communication via the master interface is remained unaffected.

12. The method according to any one of claims 9-11, wherein operating the high voltage traction system in a limited state comprises operating the high voltage traction system in a state in which the high voltage traction system is connected to the grid.

13. A vehicle comprising a high voltage traction system according to any one of claims 1-8.

14. A computer program comprising program code means for performing the method according to any one of claims 9-12, when the program is run on a computer.

15. A control unit for operating a high voltage traction system of a vehicle, the control unit being configured to perform the method according to any one of claims 9-12.
